# EUROPÄISCHE PATENTSCHRIFT

(11) **EP 2 192 009 B1**
(45) Veröffentlichungstag und Bekanntmachung des Hinweises auf die Patenterteilung: **30.05.2012**
(21) Anmeldenummer: 08169940.7
(22) Anmeldetag: 26.11.2008
(51) Int. Cl.: B60R 25/00, B60R 25/04, G07C 9/00

(54) **Identifikationsgeber für ein elektronisches Zugangssystem und eine elektronische Wegfahrsperre**
Identifier for an electronic access system and electronic immobiliser
Dispositif d'identification pour un système d'accès électronique et un dispositif d'immobilisation électronique

(43) Veröffentlichungstag der Anmeldung: 02.06.2010
(73) Patentinhaber: Hella KGaA Hueck & Co., 59552 Lippstadt (DE)
(72) Erfinder: Schrape, Jörg, 33106, Paderborn (DE); Bödeker, Klaus, 59555, Lippstadt (DE); Mehn, Michael, 59602, Rüthen (DE)

(56) Entgegenhaltungen:
- EP-A- 1 201 514
- DE-A1-102005 015 594
- DE-A1-102006 020 422
- DE-A1-102007 037 491
- KR-B- 100 769 540

## Beschreibung

Die Erfindung betrifft einen Identifikationsgeber für ein elektronisches Zugangssystem und eine elektronische Wegfahrsperre eines Kraftfahrzeugs mit LF-Antennen ("Low Frequency-", Niederfrequenz-Antennen) zur Kommunikation mit dem elektronischen Zugangssystem bzw. der elektronischen Wegfahrsperre und mit zumindest einem Schaltkreis, der an die LF-Antennen angeschlossen ist.

Identifikationsgeber für elektronische Zugangssysteme, auch als *Passiv-Entry*/*Passiv-*Go-Systeme bezeichnet, sind in vielen Varianten aus dem druckschriftlichen Stand der Technik und der täglichen Praxis bekannt. Mit einem elektronischen Zugangssystem ist es möglich, ohne aktives Eingreifen eines Benutzers eines Kraftfahrzeuges das Fahrzeug zu öffnen oder zu verriegeln. Auch Identifikationsgeber für elektronische Wegfahrsperren sind bekannt. Die Identifikationsgeber (ID) ermöglichen eine Authentifizierung und Identifizierung des den ID Geber mit sich tragenden Benutzers. Liegt eine Berechtigung für den identifizierten Benutzer vor, kann dieser die elektronische Wegfahrsperre aufheben und das Fahrzeug starten.

Ferner ist es bekannt, die Identifikationsgeber für elektronische Zugangssysteme und für elektronische Wegfahrsperren in einem Identifikationsgeber zu vereinen. Dazu wurden bisher zwei verschiedene Ansätze gewählt. Zum einen ist der Ansatz bekannt, einen Identifikationsgeber mit vier verschiedenen LF-Antennen zu verwenden, wobei drei der Antennen für die Funktionen der elektronischen Zugangssysteme und eine der Antennen für die Funktionen der elektronischen Wegfahrsperre vorgesehen sind. Die Verarbeitung der über die LF-Antennen empfangenen Signale erfolgt über einen nachgeschalteten Schaltkreis. Zum anderen ist der Ansatz bekannt, einen integrierten Schaltkreis einzusetzen, der die Funktionen für die elektronische Wegfahrsperre und das elektronische Zugangssystem übernimmt. Bei diesem Ansatz sind drei LF-Antennen vorgesehen, von denen eine die Funktionen für die elektronische Wegfahrsperre und das elektronische Zugangssystem übernimmt, während die anderen beiden LF-Antennen ausschließlich Funktionen für das elektronische Zugangssystem übernehmen.

Der erste Ansatz zieht einen großen Aufwand nach sich, da viele Bauelemente benötigt werden. Diese Bauelemente benötigen einen verhältnismäßig großen Bauraum und ziehen auch hohe Kosten nach sich. Der zweite Ansatz führte zwar zu einer technisch eleganten Lösung, die allerdings bei den derzeit verfügbaren Lösungen fahrzeugseitig weitere Änderungen notwendig macht. Diese weiteren Änderungen sind notwendig, da die bisherigen elektronischen Wegfahrsperren mit den nach dem zweiten Ansatz konstruierten Identifikationsgebern nicht kommunizieren können.

Ferner ist aus dem Dokument DE 10 2005 015 594 A1 ein Ansatz bekannt, bei dem auf der Seite des ID-Gebers zwei VLF-Empfangsantennen, also Längstwellenantennen, und eine weitere Empfangsantenne vorgesehen ist, die zwischen dem LF-Bereich und dem VLF-Bereich, also zwischen dem Langwellenbereich und dem Längstwellenbereich umschaltbar ist. Für die Zugangskontrolle werden vom Fahrzeug zum ID-Geber Informationen im VLF-Bereich, also Längstwellen gesendet, die im ID-Geber über drei Antennen empfangen werden, nämlich von den zwei VLF-Antennen und der zwischen dem VLF-Bereich und dem LF-Bereich umschaltbaren Antenne. Für die Funktion der Wegfahrsperre wird dagegen vom Fahrzeug zum ID-Geber ein Signal im LF-Bereich gesendet, dass von der umschaltbaren Antenne empfangen werden kann.

Die von dem ID-Geber empfangenen Signale werden in einem integrierten Schaltkreis verarbeitet, so wie es vorstehend für den ersten Ansatz beschrieben ist.

Bei dem aus dem Dokument DE 10 2005 015 594 A1 bekannten Ansatz muss daher eine Einrichtung zur Umschaltung der Funktion einer der Empfangsantennen vorgesehen sein. Dazu ist in dem Dokument DE 10 2005 015 594 A1 ein Detektor, ein Logikgatter, ein steuerbarer Schalter und ein zusätzlicher Kondensator in einem Antenneschwingkreis vorgesehen. Auch diese Schaltung ist aufwändig.

Der Erfindung liegt daher die Aufgabe zu Grunde, einen Identifikationsgeber vorzuschlagen, der gleichzeitig für ein elektronisches Zugangssystem und für eine elektronische Wegfahrsperre geeignet ist, mit möglichst wenigen Bauteilen auskommt und mit den bisherigen elektronischen Wegfahrsperren zusammenarbeitet.

Diese Aufgabe wird erfindungsgemäß durch einen Identifikationsgeber nach Anspruch 1 gelöst. Dieser Identifikationsgeber weist als Schaltkreise zwei integrierte Schaltkreise auf, von denen ein erster Funktionen für die elektronische Wegfahrsperre und ein zweiter Funktionen für das elektronische Zugangssystem bereitstellt. Ferner weist der erfindungsgemäße Identifikationsgeber als LF-Antennen drei LF-Antennen auf, von denen eine erste Antenne sowohl Funktionen für die elektronische Wegfahrsperre als auch für das elektronische Zugangssystem und eine zweite und eine dritte Antenne Funktionen für das elektronische Zugangssystem bereitstellen.

Bei dem ersten integrierten Schaltkreis wie auch dem zweiten integrierten Schaltkreis kann es sich um bekannte integrierte Schaltkreise handeln, die in Identifikationsgebern für die elektronische Wegfahrsperre oder das elektronische Zugangssystem eines Kraftfahrzeugs bereits verwendet werden. Die integrierten Schaltkreise solcher Identifikationsgeber werden nun vorteilhaft in dem erfindungsgemäßen Identifikationsgeber eingesetzt. Für das Empfangen von Signalen des Kraftfahrzeuges werden erfindungsgemäß zum Teil die gleichen LF-Antennen benutzt. Mit der Erfindung ist einerseits eine hohe Integration der Schaltkreise möglich und andererseits können bekannte Schaltkreise weiterverwendet werden. Außerdem können die LF-Antennen für verschiedene Funktionen genutzt werden und somit Bauelemente gespart werden.

Bei der Erfindung ist die erste Antenne einerseits unmittelbar mit dem ersten integrierten Schaltkreis und andererseits unter Zwischenschaltung eines Koppelnetzwerkes mit dem zweiten integrierten Schaltkreis verbunden. Der erste integrierte Schaltkreis arbeitet im Vergleich zu dem zweiten integrierten Schaltkreis mit im Großsignalbereich. Der zweite integrierte Schaltkreis arbeitet dagegen typischerweise im Kleinsignalbereich. Durch das Koppelnetzwerk ist ein unabhängiges Betreiben der beiden integrierten Schaltkreise parallel an der gleichen LF-Antenne, nämlich an der ersten Antenne möglich, ohne dass es zu Störungen kommt. Dazu können in dem Koppelnetzwerk Bauelemente zur Entkopplung und zum Entstören vorgesehen sein, die eine störende Rückwirkung des ersten integrierten Schaltkreises auf den zweiten integrierten Schaltkreis und des zweiten integrierten Schaltkreises auf den ersten integrierten Schaltkreis verhindern. Gleichzeitig muss natürlich gewährleistet sein, dass die von der ersten Antenne empfangenen Signale sowohl dem ersten integrierten Schaltkreis als auch dem zweiten integrierten Schaltkreis zur Verfügung gestellt werden.

Das Koppelnetzwerk hat einen Eingang mit zwei Anschlüssen und einen Ausgang mit zwei Anschlüssen. Der Eingang ist parallel zu der ersten Antenne geschaltet. Die Anschlüsse des Eingangs des Koppelnetzwerkes sind über ein erstes Widerstandselement bzw. ein zweites Widerstandselement zumindest mittelbar mit je einem Anschluss des Ausgangs des Koppelnetzwerkes verbunden. D.h. jeder Anschluss des Eingangs ist zumindest mittelbar über das erste Widerstandselement bzw. das zweite Widerstandsbauelement mit einem Anschluss des Ausgangs verbunden. Diese Widerstandselemente sind insbesondere dann sinnvoll, falls es am Ausgang des Koppelnetzwerkes im Bereich des zweiten integrierten Schaltkreises zu einem Kurzschluss kommt. Eine Rückwirkung eines solchen Kurzschlusses auf den ersten integrierten Schaltkreis kann durch solche Widerstandelemente vermindert oder verhindert werden, so dass der Betreib der Wegfahrsperre möglich bleibt.

Es ist möglich, dass jeder Anschluss des Eingangs des Koppelnetzwerkes zusätzlich über einen Kondensator zumindest mittelbar mit einem Anschluss des Ausgangs verbunden ist. In jeder Leitung von einem der beiden Anschlüsse des Eingangs zum zugeordneten Anschluss des Ausgangs kann also ein Kondensator, vorteilhaft in Reihe zum ersten oder zweiten Widerstandselement geschaltet sein. Diese Kondensatoren sind insbesondere sinnvoll, um Gleichanteile, die am Eingang des Koppelnetzwerkes anliegen können und ihren Ursprung in dem ersten integrierten Schaltkreis haben können, vom zweiten integrierten Schaltkreis fernzuhalten. Die Kondensatoren dienen zur Gleichstromentkopplung.

Das Koppelnetzwerk kann parallel zu seinem Ausgang ein drittes Widerstandselement aufweisen. Dieses dritte Widerstandselement ist dann mit den Anschlüssen des Ausgangs des Koppelnetzwerkes verbunden. Der ohmsche Widerstand dieses dritten Widerstandselementes ist vorteilhaft kleiner als ein Eingangswiderstand des zweiten integrierten Schaltkreises, an den der Ausgang des Koppelnetzwerkes angeschlossen ist. Eine solches drittes Widerstandselement dient als Ableitwiderstand, um beispielsweise Einkopplungen von außen, z. B. durch elektrostatische Entladungen oder andere Influenzerscheinungen, entgegenzuwirken und dadurch hervorgerufene Ausgleichströme im Identifikationsgeber abzuleiten, damit der Eingang des zweiten integrierten Schaltkreises mit derartigen Strömen nicht belastet wird.

Der Widerstand des dritten Widerstandselements ist vorzugsweise im Vergleich zum Widerstand des ersten und/oder zweiten Widerstandselementes hoch. Die Kapazität der Kondensatoren kann zwischen 50 bis 200 nF, insbesondere bei ca. 100 nF liegen. Die Impedanz der Kondensatoren (C1, C2) kann bei einer Betriebsfrequenz kleiner als 100 Ohm sein.

Die drei LF-Antennen können ferner in einer drei orthogonale Spulen umfassenden Antenne zusammengefasst sein.

Anhand der beigefügten Zeichnungen wird die Erfindung nachfolgend näher erläutert. Dabei zeigt:
- Fig. 1: ein Blockschaltbild eines erfindungsgemäßen Identifikationsgebers und
- Fig. 2: ein Ersatzschaltbild für das Koppelnetzwerk.

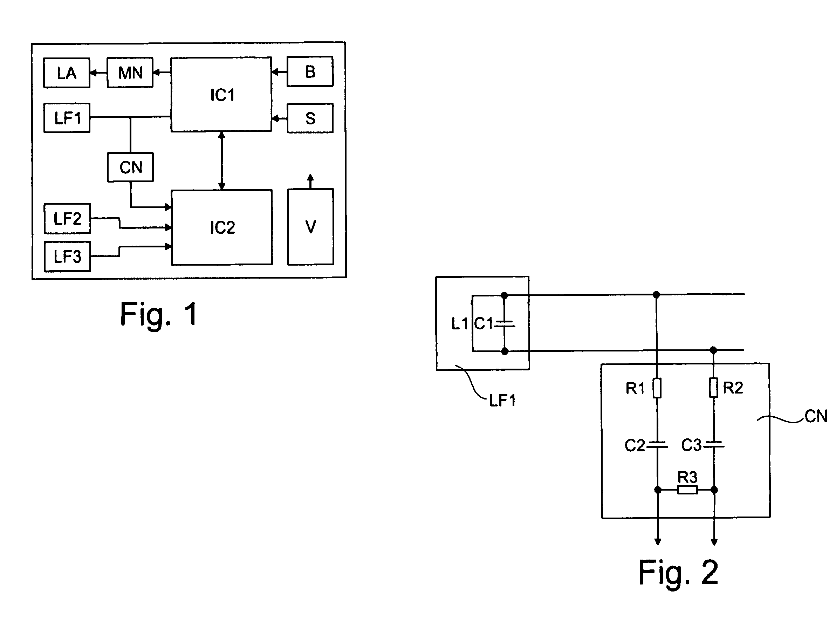

Der in der Figur 1 dargestellte erfindungsgemäße Identifikationsgeber ID umfasst einen ersten integrierten Schaltkreis IC1, der Funktionen für eine elektronische Wegfahrsperre bereitstellt. Ein zweiter integrierter Schaltkreis IC2 beinhaltet Funktionen für ein elektronisches Zugangssystem eines Kraftfahrzeugs. Beide integrierten Schaltkreise IC1, IC2 sind über Empfangsantennen mit dem Kraftfahrzeug zur drahtlosen Kommunikation verbunden. Bei den Empfangsantennen handelt es sich um drei LF-Antennen, nämlich eine erste Antenne LF1, eine zweite Antennen LF2 und eine dritte Antenne LF3.

Der erste integrierte Schaltkreis ist mit der ersten Antenne LF1 verbunden. Der erste integrierte Schaltkreis IC1 ist ferner über ein Anpassungsnetzwerk MN mit einer Sendeantenne LA verbunden, über welche Signale zum Kraftfahrzeug gesendet werden können. Über Bedienknöpfe B des Identifikationsgebers kann ein Benutzer auf die Funktion des Identifikationsgebers ID Einfluss nehmen. Die Bedienknöpfe B sind mit dem ersten integrierten Schaltkreis IC1 verbunden. Der erste integrierte Schaltkreis IC1 ist ferner mit einer Status-Leuchtdiode S verbunden, die den Zustand bzw. Status der elektronischen Wegfahrsperre anzeigen kann.

Auch der zweite integrierte Schaltkreis ist mit der ersten Antenne LF1 verbunden. Zwischen dem zweiten integrierten Schaltkreis IC2 und der ersten Antenne LF1 und somit dem ersten integrierten Schaltkreis IC1 ist jedoch ein Koppelnetzwerk CN geschaltet. Das Koppelnetzwerk CN verhindert insbesondere eine wechselseitige Rückwirkung des ersten integrierten Schaltkreises IC1 auf den zweiten integrierten Schaltkreis IC2 und umgekehrt. Außerdem können äußere Influenzeinflüsse auf die integrierten Schaltkreise IC1, IC2 unterdrückt werden. Der zweite integrierte Schaltkreis IC2 ist ferner mit der zweiten Antenne LF2 und der dritten Antenne LF3 verbunden.

Das Koppelnetzwerk CN ist als so genanntes Zweitor oder als so genannter Vierpol ausgestaltet (Figur 2). Ein erstes Tor wird durch einen Eingang mit zwei Anschlüssen gebildet. Der Eingang liegt parallel zu der ersten Antenne LF1, die im Ersatzschaltbild als Parallelschaltung einer Spule L1 und eines Kondensators C1 dargestellt ist. Der Ausgang, der das zweite Tor bildet, ist an den zweiten integrierten Schaltkreis IC2 angeschlossen (nicht in Figur 2 dargestellt). Zwischen einem ersten Anschluss des Eingangs und einem ersten Anschluss des Ausgangs ist eine Reihenschaltung aus einem ersten Widerstandselement R1 und einem ersten Kondensator C2 vorgesehen. Zwischen dem zweiten Anschluss des Eingangs und dem zweiten Anschluss des Ausgangs ist eine gleiche Reihenschaltung aus einem zweiten Widerstandselement R2 und einem zweiten Kondensator C3 vorgesehen. Das erste Widerstandselement R1 und das zweite Widerstandsbauelement R2 haben einen gleichen elektrischen Widerstand. Ebenso haben der erste Kondensator C2 und der zweite Kondensator C3 eine gleiche Kapazität. Parallel zum Ausgang des Koppelnetzwerkes CN ist ein drittes Widerstandselement R3 geschaltet.

### Bezugszeichenliste

- ID: Identifikationsgeber
- IC1: erster integrierter Schaltkreis
- IC2: zweiter integrierter Schaltkreis
- LF1: erste Antenne
- LF2: zweite Antenne
- LF3: dritte Antenne
- S: Status-Leuchtdiode
- B: Bedienknöpfe
- MN: Anpassungsnetzwerk
- CN: Koppelnetzwerk
- LA: Sendeantenne
- L1: Spule der ersten Antenne
- C1: Kondensator der ersten Antenne
- C2: erster Kondensator des Koppelnetzwerkes
- C3: zweiter Kondensator des Koppelnetzwerkes
- R1: erstes Widerstandselement des Koppelnetzwerkes
- R2: zweites Widerstandselement des Koppelnetzwerkes
- R3: drittes Widerstandselement des Koppelnetzwerkes

## Patentansprüche

1. Identifikationsgeber (ID) für ein elektronisches Zugangssystem und eine elektronische Wegfahrsperre eines Kraftfahrzeugs mit LF-Antennen zur Kommunikation mit dem elektronischen Zugangssystem bzw. der elektronischen Wegfahrsperre und mit zumindest einem Schaltkreis, der an die LF-Antennen angeschlossen ist,
wobei der Identifikationsgeber (ID) als Schaltkreise zwei integrierte Schaltkreise (IC1, IC2) aufweist, von denen ein erster Funktionen für die elektronische Wegfahrsperre und ein zweiter Funktionen für das elektronische Zugangssystem bereitstellt,
wobei der Identifikationsgeber (ID) als LF-Antennen drei LF-Antennen (LF1, LF2, LF3) aufweist, von denen eine erste Antenne (LF1) sowohl Funktionen für die elektronische Wegfahrsperre als auch für das elektronische Zugangssystem und von denen eine zweite und eine dritte Antenne (LF2, LF3) Funktionen für das elektronische Zugangssystem bereitstellt,
wobei die erste Antenne (LF1) einerseits unmittelbar mit dem ersten integrierten Schaltkreis (IC) und andererseits unter Zwischenschaltung eines Koppelnetzwerkes (CN) mit dem zweiten integrierten Schaltkreis (IC2) verbunden ist,
wobei das Koppelnetzwerk (CN) einen Eingang mit zwei Anschlüssen und einen Ausgang mit zwei Anschlüssen aufweist und der Eingang parallel zu der ersten Antenne (LF1) liegt und
wobei die Anschlüsse des Eingangs des Koppelnetzwerkes (CN) über ein erstes Widerstandselement (R1) bzw. ein zweites Widerstandselement (R2) zumindest mittelbar mit je einem Anschluss des Ausgangs des Koppelnetzwerkes (CN) verbunden ist.

2. Identifikationsgeber (ID) nach Anspruch 1, **dadurch gekennzeichnet, dass** die Anschlüsse des Eingangs des Koppelnetzwerkes (CN) zusätzlich über je einen Kondensator (C2, C3) zumindest mittelbar mit je einem Anschluss des Ausgangs des Koppelnetzwerkes (CN) verbunden ist.

3. Identifikationsgeber (ID) nach Anspruch 1 oder 2, **dadurch gekennzeichnet, dass** die Anschlüsse des Ausgangs über ein drittes Widerstandselement (R3) miteinander verbunden sind.

4. Identifikationsgeber (ID) nach Anspruch 3, **dadurch gekennzeichnet, dass** der Widerstand des dritten Widerstandselementes (R3) kleiner ist als ein Eingangswiderstand des zweiten integrierten Schaltkreises (IC2), an den der Ausgang des Koppelnetzwerkes (CN) angeschlossen ist.

5. Identifikationsgeber (ID) nach Anspruch 3 oder 4, **dadurch gekennzeichnet, dass** der Widerstand des dritten Widerstandselements (R3) im Vergleich zum Widerstand des ersten und zweiten Widerstandselementes (R1, R2) hoch ist.

6. Identifikationsgeber (ID) nach einem der Ansprüche 2 bis 5, **dadurch gekennzeichnet, dass** die Kapazität der Kondensatoren (C1, C2) zwischen 50 bis 200 nF, insbesondere ungefähr 100 nF beträgt.

7. Identifikationsgeber (ID) nach einem der Ansprüche 2 bis 6, **dadurch gekennzeichnet, dass** die Impedanz der Kondensatoren (C1, C2) bei einer Betriebsfrequenz kleiner als 100 Ohm ist.

8. Identifikationsgeber (ID) nach einem der Ansprüche 1 bis 7, **dadurch gekennzeichnet, dass** die LF-Antennen (L1, L2, L3) in einer drei orthogonale Spulen umfassenden Antenne zusammengefasst sind.

## Claims

1. Identification device (ID) for an electronic access system and an electronic immobilizer of a motor vehicle with LF antennas for communication with the electronic access system or the electronic immobilizer, and with at least one circuit that is connected to the LF antennas,
where the identification device (ID) has as circuits two integrated circuits (IC1, IC2) of which the first provides functions for the electronic immobilizer and the second provides functions for the electronic access system,
where the identification device (ID) has as LF antennas three LF antennas (LF1, LF2, LF3) of which the first antenna (LF1) provides functions both for the electronic immobilizer and for the electronic access system and the second and third antennas (LF2, LF3) provide functions for the electronic access system,
where the first antenna (LF1) is connected on one hand directly to the first integrated circuit (IC) and on the other hand to the second integrated circuit (IC2) via a coupling network (CN),
where said coupling network (CN) has an input with two terminals and an output with two terminals and the input is in parallel to the first antenna (LF1), and
where the terminals of the input of said coupling network (CN) are connected to one terminal each of the output of said coupling network (CN) at least indirectly via a first resistive element (R1) and a second resistive element (R2).

2. Identification device (ID) according to Claim 1, **characterized by** the fact that the terminals of the input of said coupling network (CN) are additionally connected to one terminal each of the output of said coupling network (CN) at least indirectly each via a capacitor (C2, C3).

3. Identification device (ID) according to Claim 1 or 2, **characterized by** the fact that the terminals of the output are connected to each other via a third resistive element (R3).

4. Identification device (ID) according to Claim 3, **characterized by** the fact that the resistance of the third resistive element (R3) is smaller than an input resistance of the second integrated circuit (IC2) to which the output of said coupling network (CN) is connected.

5. Identification device (ID) according to Claim 3 or 4, **characterized by** the fact that the resistance of the third resistive element (R3) is high in comparison to the resistance of the first and second resistive elements (R1, R2).

6. Identification device (ID) according to any one of Claims 2 to 5, **characterized by** the fact that the capacitance of the capacitors (C1, C2) is between 50 and 200 nF, in particular approximately 100 nF.

7. Identification device (ID) according to any one of Claims 2 to 6, **characterized by** the fact that the impedance of the capacitors (C1, C2) at an operating frequency is smaller than 100 ohms.

8. Identification device (ID) according to any one of Claims 1 to 7, **characterized by** the fact that the LF antennas (L1, L2, L3) are combined in one antenna comprising three orthogonal coils.

## Revendications

1. Capteur d'identification (ID) pour un système d'accès électronique et un dispositif d'immobilisation électronique d'un véhicule automobile avec antennes à basse fréquence pour communiquer avec le système d'accès électronique respectivement le dispositif d'immobilisation électronique et avec au moins un circuit qui est relié aux antennes à basse fréquence,
le capteur d'identification (ID) présentant comme circuits deux circuits intégrés (IC1, IC2) dont un premier met à disposition des fonctions pour le dispositif d'immobilisation électronique et un deuxième mettant à disposition des fonctions pour le système d'accès électronique,
le capteur d'identification (ID) présentant comme antennes à basse fréquence trois antennes à basse fréquence (LF1, LF2, LF3), dont une première antenne (LF1) met à disposition non seulement des fonctions pour le dispositif d'immobilisation électronique mais aussi pour le système d'accès électronique et dont une deuxième et une troisième antenne (LF2, LF3) mettent à disposition des fonctions pour le système d'accès électronique,
la première antenne (LF1) étant liée d'un côté directement au premier circuit intégré (IC) et de l'autre côté au deuxième circuit intégré (IC2) en intercalant un réseau de couplage (CN),
le réseau de couplage (CN) présentant une entrée avec deux raccordements et une sortie avec deux raccordements et l'entrée étant parallèle à la première antenne (LF1), et
les raccordements de l'entrée du réseau de couplage (CN) étant reliés au moyen d'un premier élément de résistance (R1) respectivement d'un deuxième élément de résistance (R2) au moins indirectement chaque fois à un raccordement de la sortie du réseau de couplage (CN).

2. Capteur d'identification (ID) selon la revendication 1, **caractérisé en ce que** les raccordements de l'entrée du réseau de couplage (CN) sont additionnellement reliés chaque fois à un condensateur (C2, C3) au moins indirectement chaque fois à un raccordement de la sortie du réseau de couplage (CN).

3. Capteur d'identification (ID) selon la revendication 1 ou 2, **caractérisé en ce que** les raccordements de la sortie sont reliés les uns avec les autres au moyen d'un troisième élément de résistance (R3).

4. Capteur d'identification (ID) selon la revendication 3, **caractérisé en ce que** la résistance du troisième élément de résistance (R3) est inférieure à une résistance d'entrée du deuxième circuit intégré (IC2) auquel la sortie du réseau de couplage (CN) est connectée.

5. Capteur d'identification (ID) selon la revendication 3 ou 4, **caractérisé en ce que** la résistance du troisième élément de résistance (R3) est grande par rapport à la résistance du premier et du deuxième élément de résistance (R1, R2).

6. Capteur d'identification (ID) selon l'une des revendications 2 à 5, **caractérisé en ce que** la capacité des condensateurs (C1, C2) s'élève à entre 50 à 200 nF, surtout à environ 100 nF.

7. Capteur d'identification (ID) selon l'une des revendications 2 à 6, **caractérisé en ce que** l'impédance des condensateurs (C1, C2) est inférieure à 100 Ohm en cas d'une fréquence de fonctionnement.

8. Capteur d'identification (ID) selon l'une des revendications 1 à 7, **caractérisé en ce que** les antennes à basse fréquence (L1, L2, L3) sont regroupées dans une antenne comprenant trois bobines orthogonales.
